# EUROPEAN PATENT APPLICATION

(11) **EP 4 752 664 A1**
(43) Date of publication of application: **03.06.2026**
(21) Application number: 25197820.1
(22) Date of filing: 25.08.2025
(51) Int. Cl.: G05D 1/244, G05D 1/249, G05D 1/646, B62D 65/18

(54) **SYSTEM INCLUDING AN INSPECTION FACILITY FOR INSPECTION OF AN UNMANNED VEHICLE**

(30) Priority: 29.11.2024 JP 2024207834
(71) Applicant: TOYOTA JIDOSHA KABUSHIKI KAISHA, Toyota-shi, Aichi-ken 471-8571 (JP)
(72) Inventor: TANAKA, Yohei, Toyota-shi, Aichi-ken, 471-8571 (JP)
(74) Representative: TBK

(57) **Abstract**

A system includes an inspection facility that inspects a vehicle that is travelable by unmanned driving, and a control device that controls the unmanned driving of the vehicle such that a direction of the vehicle with respect to the inspection facility is oriented in a direction that is set in advance.

## Description

### BACKGROUND OF THE INVENTION

### 1. Field of the Invention

The present disclosure relates to a system.

### 2. Description of Related Art

Japanese Unexamined Patent Application Publication (Translation of PCT Application) No. 2017-538619 (JP 2017-538619 A) discloses technology of causing a vehicle to travel autonomously or through remote control during a vehicle manufacturing process. Generally, inspection of the optical axis of lights and inspection of radar devices are performed as part of the manufacturing process. In such inspections, a vehicle orientation device is used to orient the vehicle in a direction that is set in advance. The vehicle orientation device changes the orientation of the vehicle by pushing tires of the vehicle from the side.

### SUMMARY OF THE INVENTION

In inspection of vehicles that can travel autonomously or by remote control, a system is desired that can orient vehicles in a direction that is set in advance for inspection, without using a vehicle orientation device.

The present disclosure can be realized as the following aspects.
(1) One aspect of the present disclosure provides a system. The system includes an inspection facility that inspects a vehicle that is travelable by unmanned driving, and a control device that controls the unmanned driving of the vehicle such that a direction of the vehicle with respect to the inspection facility is oriented in a direction that is set in advance.
   The system according to this aspect is equipped with the control device that controls the unmanned driving of the vehicle such that the direction of the vehicle with respect to the inspection facility is oriented in the direction that is set in advance, and accordingly inspection can be carried out with the direction of the vehicle oriented in the direction that is set in advance without using a vehicle orientation device.
(2) In the system according to the above aspect, the control device may acquire imaging data that is output from an imaging unit that is provided outside of the vehicle, and that performs imaging of the inspection facility and the vehicle and outputs the imaging data, and control the unmanned driving of the vehicle using the imaging data, such that the direction of the vehicle with respect to the inspection facility is oriented in the direction that is set in advance.

According to the system of this aspect, the control device uses the imaging data that is output by the sensors that are provided outside the vehicle, and thus can acquire the imaging data using cameras, for example, that are provided in a factory including the inspection facility.

Also, the unmanned driving of the vehicle is controlled using the imaging data, and accordingly, even when a position of the inspection facility is at a position different from that in map information, due to changes in the facility in the factory or the like, the unmanned driving can be controlled based on more precise information as compared with a configuration in which the vehicle is controlled using only the map information and not using imaging data, such that the direction of the vehicle is oriented in the direction that is set in advance.

(3) In the system according to the above aspect, the control device may acquire master data from a storage device that stores the master data that is imaging data of the vehicle in a state of being oriented in the direction that is set in advance with respect to the inspection facility, and further use the master data to control the unmanned driving of the vehicle such that the direction of the vehicle is oriented in the direction that is set in advance with respect to the inspection facility.

According to the system of this aspect, the control device controls the unmanned driving of the vehicle further using the master data, such that the direction of the vehicle relative to the inspection facility is oriented in the direction that is set in advance, and accordingly, storing appropriate master data in the storage device in advance enables the unmanned driving to be controlled such that the direction of the vehicle is oriented in the direction that is set in advance more precisely.

(4) In the system according to the above aspect, the inspection facility may include a marker that serves as a reference for the direction that is set in advance for the vehicle, the imaging unit may perform imaging of the vehicle and the marker, and output the imaging data including the vehicle and the marker, and the control device may use the marker in the imaging data to control the unmanned driving of the vehicle such that the direction of the vehicle is oriented in the direction that is set in advance.

According to the system of this aspect, the inspection facility has the marker that serves as the reference for the direction of the vehicle that is set in advance, and the control device uses the marker in the imaging data to control the unmanned driving of the vehicle such that the direction of the vehicle is oriented in the direction that is set in advance, and accordingly the reference for the direction that is set in advance for the vehicle can be set with a relatively simple configuration. Also, the reference for the direction that is set in advance can be easily changed by changing a position of the marker.

(5) In the system according to the above aspect, the control device may acquire imaging data from an imaging unit that is provided to the vehicle, and that performs imaging of the inspection facility and outputs the imaging data including the inspection facility, and control the unmanned driving of the vehicle using the imaging data, such that the direction of the vehicle with respect to the inspection facility is oriented in the direction that is set in advance.

According to the system of this aspect, the imaging unit is provided in the vehicle, and thus the imaging data can be acquired by using a camera that is provided in the vehicle for shooting outside of the vehicle, for example.

Also, the unmanned driving of the vehicle is controlled using the imaging data, and accordingly, even when the position of the inspection facility is at a position different from that in map information, due to changes in the facility in the factory or the like, the unmanned driving can be controlled based on more precise information as compared with a configuration in which the vehicle is controlled using only the map information and not using the imaging data, such that the direction of the vehicle is oriented in the direction that is set in advance.

In addition to the above-described aspects of the system, the present disclosure can be realized in the form of, for example, a control device for a vehicle, a directional control method for a vehicle, a program for realizing the directional control method, a non-transitory recording medium in which the program is recorded, a program product, and so forth. Note that the program product may be provided as a recording medium on which the program is recorded, for example, or as a program product that can be distributed via a network.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram illustrating a configuration of a system according to a first embodiment;
FIG. 2 is a block diagram illustrating the configuration of the system;
FIG. 3 is a flowchart showing processing procedures of traveling control for a vehicle according to the first embodiment;
FIG. 4 is a diagram for describing directional control of the vehicle in an inspection facility;
FIG. 5 is a flowchart showing procedures of the directional control;
FIG. 6 is a diagram for describing directional control according to a second embodiment;
FIG. 7 is a flowchart showing procedures of the directional control in the second embodiment;
FIG. 8 is an explanatory diagram illustrating a schematic configuration of a system according to a third embodiment; and
FIG. 9 is a flowchart showing processing procedures of traveling control for a vehicle according to the third embodiment.

### DETAILED DESCRIPTION OF EMBODIMENTS

### A. First Embodiment

### Overview of System 50

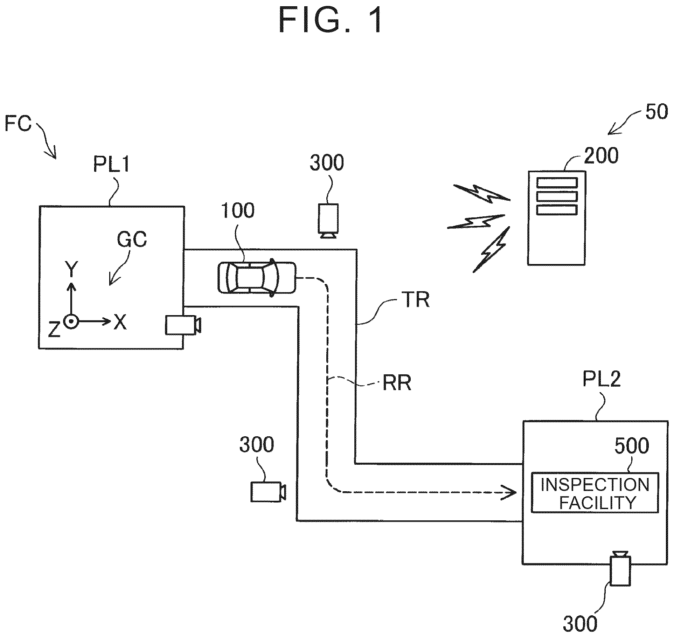

FIG. 1 is a conceptual diagram illustrating a configuration of a system 50 according to a first embodiment. The system 50 includes one or more vehicles 100 that are moving objects, a control device 200, and one or more sensors 300.

In the present disclosure, the term "moving object" means a movable object, and may be, for example, a vehicle or an electric vertical take-off and landing aircraft (so-called flying car). The vehicle may be a vehicle that travels on wheels or a vehicle that travels on tracked treads, and may be, for example, a passenger car, a truck, a bus, a two-wheeled vehicle, a four-wheeled vehicle, a construction vehicle, or the like. The vehicle includes a battery electric vehicle (BEV), a gasoline-powered vehicle, a hybrid electric vehicle, and a fuel cell electric vehicle. When the moving object is other than a vehicle, the terms "vehicle" and "car" as used in the present disclosure can be replaced with "moving object" as appropriate, and the term "travel" can be replaced with "move" as appropriate.

In the present embodiment, the vehicle 100 is configured to be able to travel by unmanned driving. The term "unmanned driving" refers to driving that is not based on traveling operations performed by an occupant. Traveling operations refer to operations related to at least one of "moving", "turning", and "stopping" the vehicle 100. Unmanned driving is realized through automatic or manual remote control using a device that is located outside of the vehicle 100, or through autonomous control by the vehicle 100 itself. The vehicle 100 that is traveling by unmanned driving may have occupants on board who do not perform traveling operations. Occupants who do not perform traveling operations include, for example, persons simply seated in seats of the vehicle 100, and persons performing tasks other than the traveling operations, such as assembly, inspection, and operation of switches, while being on board the vehicle 100. Note that driving by traveling operations performed by an occupant is sometimes referred to as "manned driving".

In the present specification, the term "remote control" includes "full remote control" in which all operations of the vehicle 100 are completely decided from outside of the vehicle 100, and "partial remote control" in which part of the operations of the vehicle 100 is decided from outside of the vehicle 100. Also, the term "autonomous control" includes "full autonomous control" in which the vehicle 100 autonomously controls its own operations without receiving any information from external devices outside of the vehicle 100, and "partial autonomous control" in which the vehicle 100 autonomously controls its own operations using information that is received from external devices outside of the vehicle 100.

In the present embodiment, the system 50 is used in a factory FC in which the vehicle 100 is manufactured. A reference coordinate system of the factory FC is a global coordinate system GC, and any position within the factory FC can be represented by X, Y, and Z coordinates in the global coordinate system GC. The factory FC includes a first location PL1 and a second location PL2. The first location PL1 and the second location PL2 are connected by a travel path TR over which the vehicle 100 can travel. The vehicle 100 moves from the first location PL1 to the second location PL2 along the travel path TR by unmanned driving. Assembly and various types of inspection for manufacturing the vehicle 100 are performed at the first location PL1 and the second location PL2.

An inspection facility 500 is provided at the second location PL2. After moving to the second location PL2, the vehicle 100 proceeds toward the inspection facility 500 by unmanned driving. The inspection facility 500 performs inspection of the vehicle 100. The inspection facility 500 performs, for example, inspection of the optical axis of lamps or inspection of a radar device.

A plurality of the sensors 300 is installed at the first location PL1 and the second location PL2, and along the travel path TR. The sensors 300 are sensors that are provided outside of the vehicle 100. In the present embodiment, the sensors 300 are sensors that capture the vehicle 100 from outside of the vehicle 100. The sensors 300 include a communication device (omitted from illustration), and can communicate with other devices, such as the control device 200 and so forth, through wired communication or wireless communication.

Specifically, the sensors 300 are configured as cameras serving as imaging units. The cameras serving as the sensors 300 perform imaging of the vehicle 100 and output imaging data thereof. The sensor 300 that is provided at the second location PL2 performs imaging of the vehicle 100 and the inspection facility 500. More specifically, the sensor 300 performs imaging of the vehicle 100 that is at the inspection facility 500 or in a vicinity of the inspection facility 500. That is to say, one piece of imaging data includes the vehicle 100 and the inspection facility 500.

### Configuration of System 50

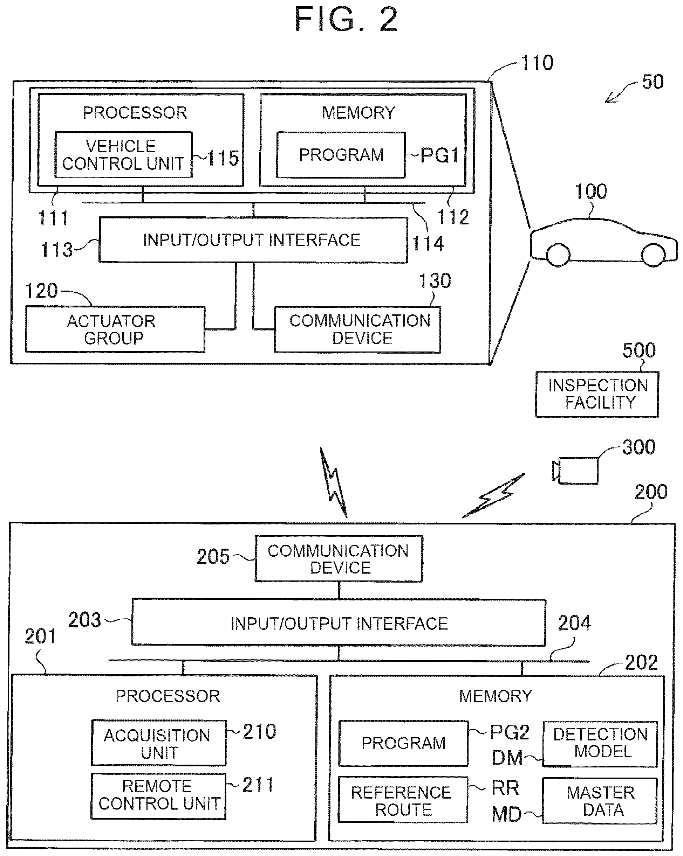

FIG. 2 is a block diagram illustrating a configuration of the system 50. The vehicle 100 includes a vehicle control device 110 for controlling various components of the vehicle 100, an actuator group 120 including one or more actuators that are driven under control of the vehicle control device 110, and a communication device 130 for communicating with external devices, such as the control device 200 and so forth, via wireless communication. The actuator group 120 includes an actuator of a drive device that causes the vehicle 100 to accelerate, an actuator of a steering system that causes direction of travel of the vehicle 100 to be changed, and an actuator of a braking device that causes the vehicle 100 to decelerate.

The vehicle control device 110 is made up of a computer including a processor 111, memory 112, an input/output interface 113, and an internal bus 114. The processor 111, the memory 112, and the input/output interface 113 are connected via the internal bus 114, so as to be capable of bidirectional communication with each other. The actuator group 120 and the communication device 130 are connected to the input/output interface 113. The processor 111 realizes various functions including a function as a vehicle control unit 115 by executing a program PG1 that is stored in the memory 112.

The vehicle control unit 115 causes the vehicle 100 to travel by controlling the actuator group 120. The vehicle control unit 115 can cause the vehicle 100 to travel by controlling the actuator group 120 using traveling control signals that are received from the control device 200. The traveling control signals are control signals for causing the vehicle 100 to travel. In the present embodiment, the traveling control signals include, as parameters, acceleration and steering angle of the vehicle 100. In other embodiments, the traveling control signals may include, instead of or in addition to the acceleration of the vehicle 100, the speed of the vehicle 100 as a parameter.

The control device 200 is configured as a computer including a processor 201, memory 202, an input/output interface 203, and an internal bus 204. The control device 200 is, for example, a server. The processor 201, the memory 202, and the input/output interface 203 are connected via the internal bus 204 so as to be capable of bidirectional communication with each other. A communication device 205 for communicating with various types of devices outside of the control device 200 is connected to the input/output interface 203. The communication device 205 can communicate with the vehicle 100 via wireless communication, and can communicate with the sensors 300 via either wired communication or wireless communication. The processor 201 realizes various types of functions including functions as an acquisition unit 210, and a remote control unit 211, by executing a program PG2 that is stored in the memory 202.

The acquisition unit 210 acquires imaging data, in which the vehicle 100 and the inspection facility 500 are imaged, from the sensor 300 that is provided at the second location PL2. Also, the acquisition unit 210 acquires master data MD that is stored in the memory 202 in advance. The master data MD is imaging data of the vehicle 100 in a state of being oriented in a direction that is set in advance relative to the inspection facility 500. The term "direction that is set in advance" refers to a desirable orientation of the vehicle 100 when carrying out inspection in the inspection facility 500. For example, in a case in which the optical axis of the vehicle 100 is to be inspected by the inspection facility 500, it is desirable that a light-receiving plate 502 that the inspection facility 500 is equipped with and a front-rear axis of the vehicle 100 are orthogonal to each other. The orientation of the vehicle 100 that is desirable for appropriately carrying out the inspection by the inspection facility 500 is set as the "direction that is set in advance".

The remote control unit 211 acquires detection results from the sensors, generates traveling control signals for controlling the actuator group 120 of the vehicle 100 using the detection results, and controls the unmanned driving of the vehicle 100 by transmitting the traveling control signals to the vehicle 100. The remote control unit 211 may generate and output not only traveling control signals but also control signals for controlling actuators that operate various types of accessory devices, and various accessories such as windshield wipers, power windows, and lamps, for example, that are provided in the vehicle 100. That is to say, the remote control unit 211 may operate such various types of accessories and various types of accessory devices by remote control.

Also, the remote control unit 211 controls the unmanned driving of the vehicle 100 such that direction of the vehicle 100 relative to the inspection facility 500 is oriented in a direction that is set in advance. Specifically, the unmanned driving of the vehicle 100 is controlled such that the direction of the vehicle 100 relative to the inspection facility 500 is oriented in the direction that is set in advance, using the imaging data and the master data MD that are acquired by the acquisition unit 210. This control of the vehicle 100 will be described in detail later.

### Traveling Control of Vehicle 100

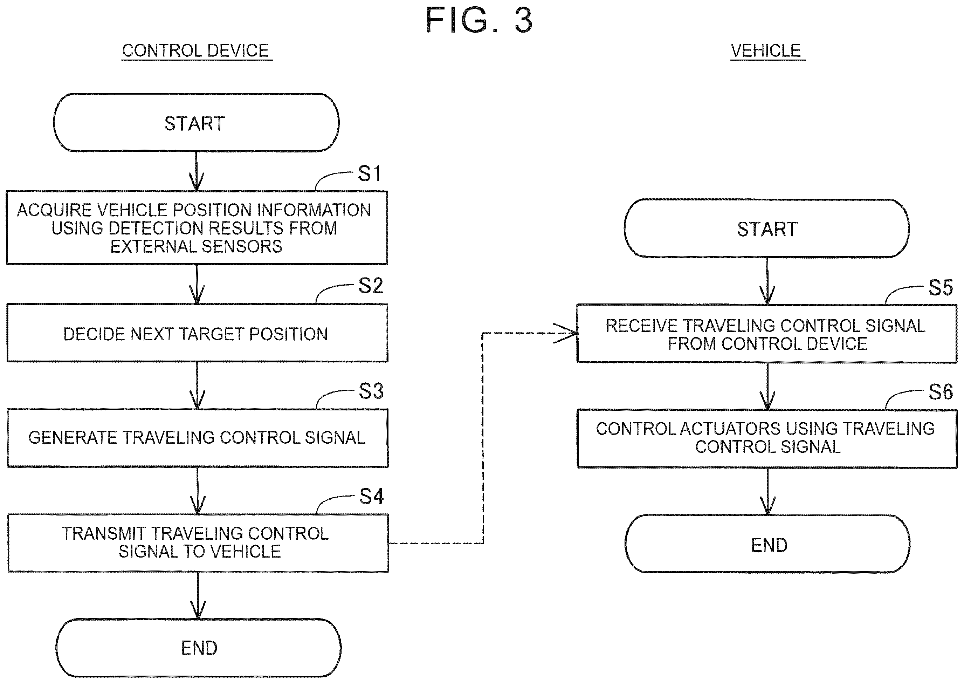

FIG. 3 is a flowchart showing processing procedures of traveling control of the vehicle 100 according to the first embodiment. These procedures are carried out to cause the vehicle 100 to travel by unmanned driving. In the processing procedures of FIG. 3, the processor 201 of the control device 200 functions as the remote control unit 211 by executing the program PG2. Also, the processor 111 of the vehicle 100 functions as the vehicle control unit 115 by executing the program PG1.

In step S1, the processor 201 of the control device 200 acquires vehicle position information using detection results that are output from the sensors 300. The vehicle position information is position information that serves as a basis for generating traveling control signals. In the present embodiment, the vehicle position information includes the position and orientation of the vehicle 100 in the global coordinate system GC of the factory FC. Specifically, in step S1, the processor 201 acquires the vehicle position information using imaged images that are acquired from cameras that are the sensors 300.

In detail, in step S1 the processor 201 detects, for example, a contour of the vehicle 100 from the imaged images, calculates coordinates of a positioning point of the vehicle 100 in the coordinate system of the imaged images, i.e., a local coordinate system, and converts the calculated coordinates into coordinates in the global coordinate system GC, thereby acquiring the position of the vehicle 100. The contour of the vehicle 100 that is included in the imaged image can be detected by, for example, inputting the imaged image into a detection model DM that uses artificial intelligence. The detection model DM is prepared within the system 50 or outside of the system 50, for example, and is stored in advance in the memory 202 of the control device 200. Examples of the detection model DM include a trained machine learning model that has been trained to realize either semantic segmentation or instance segmentation. A convolutional neural network (hereinafter referred to as "CNN") trained by supervised learning using a training dataset, for example, can be used as the machine learning model. The training dataset includes, for example, a plurality of training images including the vehicle 100, and labels indicating, for each region in the training images, whether the region is a region that indicates the vehicle 100 or is a region that indicates other than the vehicle 100. During training of the CNN, parameters of the CNN preferably are updated by backpropagation (error backpropagation) so as to reduce error between output results from the detection model DM and the labels. Also, the processor 201 can acquire the orientation of the vehicle 100 by, for example, performing estimation thereof based on direction of a motion vector of the vehicle 100 that is calculated from displacements of feature points of the vehicle 100 among frames of the imaged images, using optical flow.

In step S2, the processor 201 of the control device 200 decides a target position to which the vehicle 100 should proceed next. In the present embodiment, the target position is represented by X, Y, and Z coordinates in the global coordinate system GC. A reference route RR that defines a route the vehicle 100 should travel is stored in advance in the memory 202 of the control device 200. The route is represented by a node indicating a departure point, nodes indicating waypoints, a node indicating a destination, and links connecting the nodes. The processor 201 decides the target position to which the vehicle 100 should proceed next, using the vehicle position information and the reference route RR. The processor 201 decides the target position on the reference route RR ahead of the current position of the vehicle 100.

In step S3, the processor 201 of the control device 200 generates a traveling control signal for causing the vehicle 100 to travel toward the target position that is decided. The processor 201 calculates a traveling speed of the vehicle 100 based on the transition of the position of the vehicle 100, and compares the traveling speed that is calculated with a target speed. In general, the processor 201 decides the acceleration such that the vehicle 100 accelerates when the traveling speed is lower than the target speed, and decides the acceleration such that the vehicle 100 decelerates when the traveling speed is higher than the target speed. Also, when the vehicle 100 is situated on the reference route RR, the processor 201 decides a steering angle and the acceleration such that the vehicle 100 does not deviate from the reference route RR, and when the vehicle 100 is not situated on the reference route RR, i.e., when the vehicle 100 has deviated from the reference route RR, decides the steering angle and the acceleration such that the vehicle 100 returns to the reference route RR.

In step S4, the processor 201 of the control device 200 transmits the traveling control signal that is generated to the vehicle 100. The processor 201 repeatedly performs, at a predetermined cycle, the acquisition of vehicle position information, the deciding of a target position, the generation of a traveling control signal, the transmission of the traveling control signal, and so forth.

In step S5, the processor 111 of the vehicle 100 receives the traveling control signal that is transmitted from the control device 200. In step S6, the processor 111 of the vehicle 100 controls the actuator group 120 using the traveling control signal that is received, thereby causing the vehicle 100 to travel in accordance with the acceleration and the steering angle that are indicated by the traveling control signal. The processor 111 repeatedly performs, at a predetermined cycle, the reception of the traveling control signal and the control of the actuator group 120. According to the system 50 in the present embodiment, the vehicle 100 can be made to travel by remote control, and the vehicle 100 can be moved without using transport equipment such as cranes, conveyors, or the like.

### Directional Control of Vehicle 100 in Inspection Facility 500

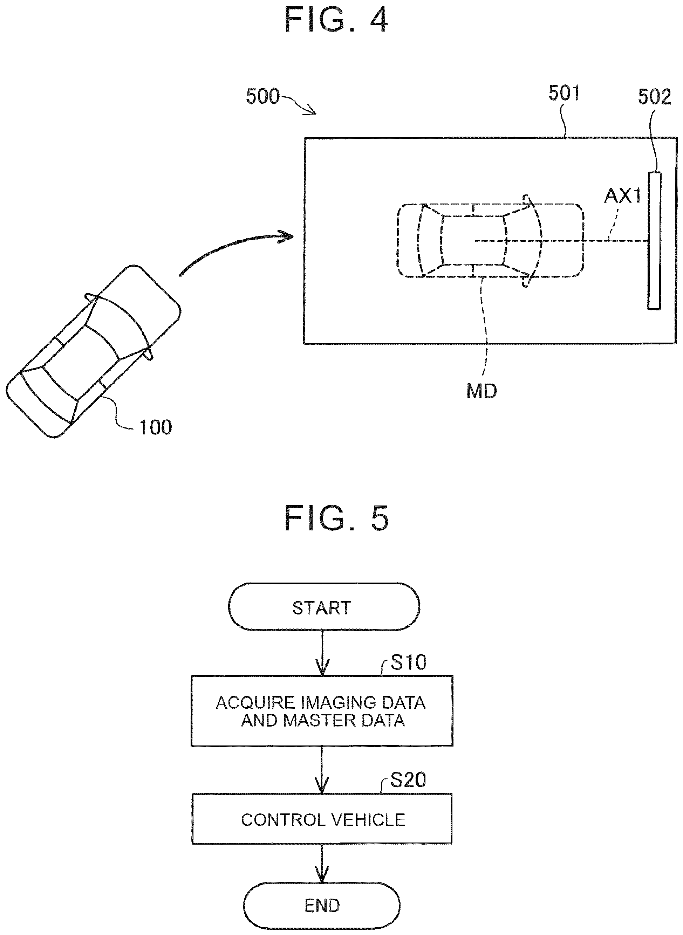

FIG. 4 is a diagram for describing directional control of the vehicle 100 in the inspection facility 500 (hereinafter, also referred to as "directional control"). FIG. 4 illustrates an example of imaging data. FIG. 5 is a flowchart showing procedures of directional control. Directional control is performed in a preparation stage for inspection in the inspection facility 500. More specifically, directional control is carried out after the vehicle 100 enters the second location PL2 at which the inspection facility 500 illustrated in FIG. 1 is provided, for example. Directional control is performed to orient the orientation of the vehicle 100 in an appropriate direction such that the inspection facility 500 carries out inspection as appropriate.

An example in which the inspection facility 500 inspects the optical axis of the vehicle 100 will be described below. The inspection facility 500 includes an inspection area 501 and the light-receiving plate 502. The inspection area 501 is a location inside the inspection facility 500 at which the vehicle 100 stops and inspection is carried out. The light-receiving plate 502 is a plate that is irradiated by the lamps of the vehicle 100. The inspection facility 500 detects deviation of the optical axis, using an irradiation pattern of light by which the light-receiving plate 502 is irradiated, and outputs an amount of deviation.

As illustrated in FIG. 4, when the vehicle 100 enters the second location PL2 by unmanned driving, the acquisition unit 210 acquires the imaging data and the master data MD in step S10 shown in FIG. 5. The imaging data is output by the sensors 300 that perform imaging of images of the vehicle 100 and the inspection facility 500. As indicated by a dashed line in FIG. 4, the master data MD is imaging data of a state of being oriented in the direction set in advance in the inspection area 501 of the inspection facility 500. In the present embodiment, the direction that is set in advance is a direction in which a front-rear axis AX1 of the vehicle 100 is perpendicular to a light-receiving face of the light-receiving plate 502 of the inspection facility 500.

As shown in FIG. 5, in step S20, the remote control unit 211 uses the imaging data and the master data MD to control the unmanned driving of the vehicle 100 such that the direction of the vehicle 100 is oriented in the direction that is set in advance. More specifically, the unmanned driving of the vehicle 100 is controlled such that the direction of the vehicle 100 in the master data MD illustrated in FIG. 4 matches the direction of the vehicle 100 in the imaging data. The control of the unmanned driving of the vehicle 100 is performed in accordance with the procedures of "Traveling Control of Vehicle 100" that is described above. The remote control unit 211 controls the unmanned driving of the vehicle 100 such that, for example, the front-rear axis of the vehicle 100 in the master data MD is aligned with the front-rear axis of the vehicle 100 in the imaging data.

When the directional control procedures that are shown in FIG. 5 are completed, inspection of the vehicle 100 is carried out by the inspection facility 500. After the inspection is completed, the vehicle 100 moves from the second location PL2 by unmanned driving, and other inspection processes and so forth are carried out.

According to the system 50 of the first embodiment that is described above, the control device 200 controls unmanned driving of the vehicle 100 such that the direction of the vehicle 100 relative to the inspection facility 500 is oriented in the direction that is set in advance, and accordingly, inspection can be carried out by orienting the direction of the vehicle 100 in the direction that is set in advance without using a vehicle orientation device.

Furthermore, according to the system 50 of the first embodiment, the control device 200 uses the imaging data that is output by the sensors 300 that are provided outside the vehicle 100, and thus can acquire the imaging data using cameras, for example, that are provided in the factory FC that is equipped with the inspection facility 500.

Also, according to the system 50 of the first embodiment, the unmanned driving of the vehicle 100 is controlled using imaging data, and accordingly, even when the position of the inspection facility 500 is at a position that is different from that in map information, due to changes in the facility in the factory FC, or the like, unmanned driving can be controlled based on more precise information as compared with a configuration in which the vehicle 100 is controlled using only map information and not using imaging data, such that the direction of the vehicle 100 is oriented in the direction that is set in advance.

Also, according to the system 50 of the first embodiment, the control device 200 controls unmanned driving of the vehicle 100 further using the master data MD, such that the direction of the vehicle 100 relative to the inspection facility 500 is oriented in the direction that is set in advance, and accordingly, storing master data MD that is appropriate in the memory 202 in advance enables unmanned driving to be controlled such that the direction of the vehicle 100 is oriented in the direction that is set in advance more precisely.

### B. Second Embodiment

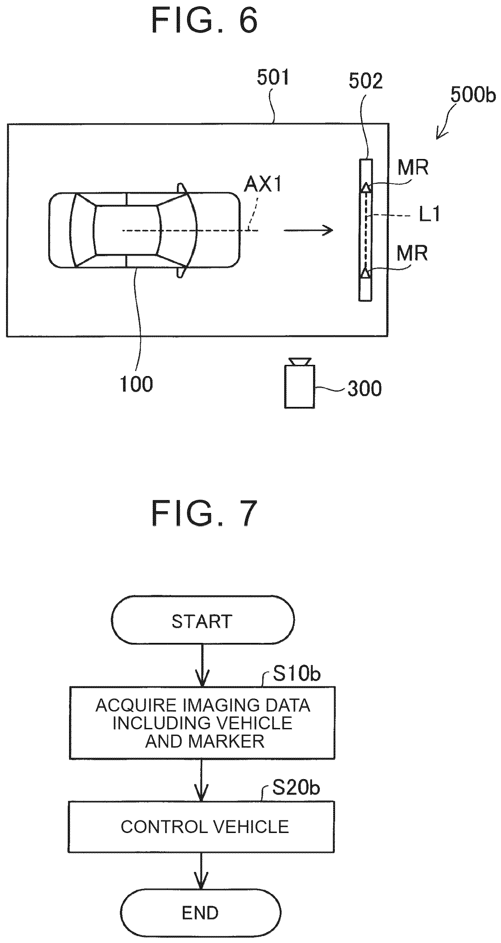

FIG. 6 is a diagram for describing directional control of a second embodiment. FIG. 7 is a flowchart showing procedures of directional control of the second embodiment. Directional control in the second embodiment differs from directional control in the first embodiment, in that the directional control is performed using markers MR that are provided to an inspection facility 500b, instead of the master data MD. Accordingly, in the system of the second embodiment, the memory 202 does not need to store the master data MD.

As illustrated in FIG. 6, the inspection facility 500b has the markers MR. The markers MR are references for the direction of the vehicle 100 that is set in advance. The markers MR have optional external shapes that can be detected by the sensor 300. In the present embodiment, two markers MR are provided on the light-receiving plate 502. More specifically, the two markers MR are provided on the light-receiving plate 502 such that a straight line L1 connecting the markers MR is parallel to the light receiving plate 502. The sensor 300 performs imaging of the vehicle 100 and the markers MR, and outputs imaging data including the image of the vehicle 100 and the markers MR.

In step S10b shown in FIG. 7, the acquisition unit 210 acquires the imaging data that is output by the sensor 300. This imaging data includes the vehicle 100 and the markers MR. In step S20b, the remote control unit 211 uses the markers MR in the imaging data to control unmanned driving of the vehicle 100, such that the direction of the vehicle 100 is oriented in the direction that is set in advance. In the present embodiment, the remote control unit 211 controls the unmanned driving of the vehicle 100 such that the straight line L1 connecting the two markers MR is perpendicular to the front-rear axis AX1 of the vehicle 100.

According to the system 50 of the second embodiment that is described above, the inspection facility 500b has the markers MR that serve as a reference for the direction of the vehicle 100 that is set in advance, and the control device 200 uses the markers MR in the imaging data to control the unmanned driving of the vehicle 100 such that the direction of the vehicle 100 is oriented in the direction that is set in advance, and accordingly a reference for the direction that is set in advance for the vehicle 100 can be set with a relatively simple configuration. Also, the reference for the direction that is set in advance can be easily changed by changing the positions of the markers MR.

### C. Third Embodiment

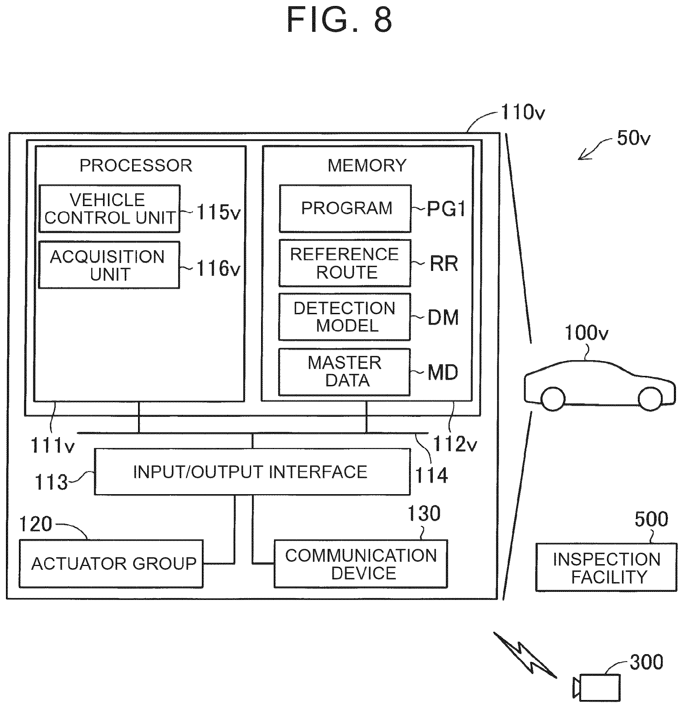

FIG. 8 is an explanatory diagram illustrating a schematic configuration of a system 50v according to a third embodiment. The present embodiment differs from the first embodiment in that the system 50v does not include the control device 200. Also, a vehicle 100v according to the present embodiment is capable of traveling by autonomous control of the vehicle 100v. Other configurations thereof are the same as those of the first embodiment, unless described otherwise. Note that the system 50v according to the third embodiment may be used in combination with the system according to the second embodiment.

In the present embodiment, a processor 111v of a vehicle control device 110v functions as a vehicle control unit 115v by executing the program PG1 that is stored in memory 112v. The vehicle control unit 115v can cause the vehicle 100v to travel by autonomous control, by acquiring output results from the sensors, generating a traveling control signal using the output results, and outputting the traveling control signal that is generated, so as to cause the actuator group 120 to operate. In the present embodiment, the detection model DM and the reference route RR are stored in advance in the memory 112v, in addition to the program PG1.

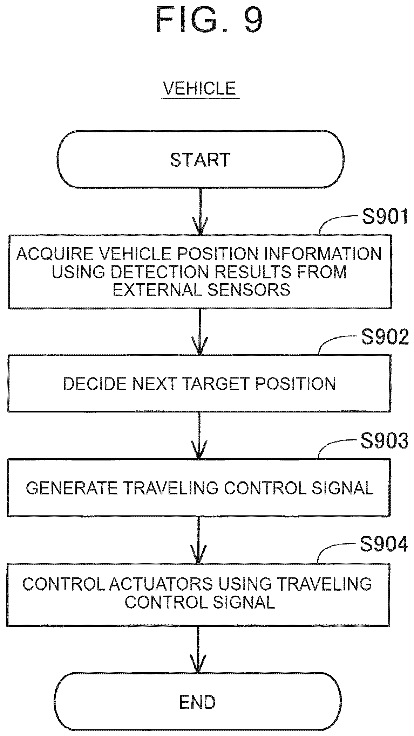

FIG. 9 is a flowchart showing processing procedures of traveling control for the vehicle 100v according to the third embodiment. In the processing procedures of FIG. 9, the processor 111v of the vehicle 100v functions as the vehicle control unit 115v by executing the program PG1.

In step S901, the processor 111v of the vehicle control device 110v acquires vehicle position information using detection results that are output from the cameras that are the sensors 300. In step S902, the processor 111v decides a target position to which the vehicle 100v should proceed next. In step S903, the processor 111v generates a traveling control signal for causing the vehicle 100v to travel toward the target position that is decided. In step S904, the processor 111v controls the actuator group 120 using the traveling control signal that is generated, thereby causing the vehicle 100v to travel in accordance with parameters that are indicated by the traveling control signal. The processor 111v repeatedly performs, at a predetermined cycle, the acquisition of vehicle position information, the deciding of a target position, the generation of a traveling control signal, and the control of the actuators. With the system 50v according to the present embodiment, the vehicle 100v can be caused to travel by autonomous control of the vehicle 100v, even without the vehicle 100v being remotely controlled by the control device 200.

As illustrated in FIG. 8, the processor 111v according to the present embodiment also functions as an acquisition unit 116v by executing the program PG1 that is stored in the memory 112v. The acquisition unit 116v has the same functions as the acquisition unit 210 according to the first embodiment. Accordingly, in the present embodiment, the same processing as the directional control that is shown in FIGS. 5 and 7 is carried out by the processor 111v of the vehicle 100v.

The system 50v according to the third embodiment that is described above can also execute traveling control and directional control of the vehicle 100, in the same way as with the system 50 according to the first embodiment and the second embodiment.

### D. Other Embodiment 1:

(D1) In each of the above embodiments, the sensors 300 that are used for directional control are cameras that are provided outside the vehicle 100, but the present disclosure is not limited to this. The sensors 300 may be, for example, light detection and ranging (LiDAR) devices. In this case, the detection results and the master data MD that are output by the sensors 300 may be three-dimensional point cloud data, representing the vehicle 100 and the inspection facility 500 and 500b. Also, the sensors 300 that are used for directional control may be provided to the vehicle 100. The sensors 300 are, for example, a camera that shoots outside of the vehicle 100, and a ranging device. When such a configuration is applied to the system 50 according to the first embodiment, imaging data that is imaged by the sensor 300 that is provided on the vehicle 100 oriented in a direction that is set in advance is used as the master data MD. According to such a configuration, for example, the sensor 300 that is provided on the vehicle 100 can be used to acquire imaging data.

(D2) In each of the above embodiments, the memory 112, 112v, and 202 may be any storage device. Examples of such storage devices include hard disc drives (HDDs), solid state drives (SSDs), dynamic random access memory (DRAM), and so forth.

(D3) In each of the above embodiments, an example was described in which the inspection facility 500 carries out inspection of the optical axis of the vehicle 100, but the present disclosure is not limited to this. The inspection facility 500 may carry out any type of inspection. Also, the directional control may also be carried out as a preliminary step to any inspection. For example, the inspection may be an inspection of functions using electromagnetic waves that are emitted from the vehicle 100, based on intensity of the electromagnetic waves or reflected waves of the electromagnetic waves when the vehicle orientation matches the direction that is set in advance.

(D4) In the second embodiment described above, the inspection facility 500b has two markers MR, but the present disclosure is not limited to this. The inspection facility 500b may have any number of markers MR. The markers MR may be provided at any position in the inspection facility 500b. The markers MR may also be provided on the vehicle 100. In such a configuration, the acquisition unit 210 may acquire imaging data including a marker MR that is provided on the vehicle 100 and a marker MR that is provided on the inspection facility 500b, and the remote control unit 211 may use these markers MR to control the unmanned driving of the vehicle 100.

(D5) In each of the above embodiments, at least one of the functions of the acquisition unit 210 and the remote control unit 211 may be carried out by the inspection facility 500. In this configuration, the inspection facility 500 includes a computer that has a processor and memory.

(D6) In each of the above embodiments, the remote control unit 211 may control the unmanned driving of the vehicle 100 such that the direction of the vehicle 100 relative to the inspection facility 500 is oriented in the direction that is set in advance, without using imaging data. The remote control unit 211 may use map information, for example, to control the unmanned driving of the vehicle 100 such that the direction of the vehicle 100 relative to the inspection facility 500 is oriented in the direction set in advance.

(D7) In the above first embodiment, the remote control unit 211 may control the unmanned driving of the vehicle 100 using just the imaging data such that the direction of the vehicle 100 relative to the inspection facility 500 is oriented in the direction that is set in advance, without using the master data MD. For example, the remote control unit 211 may control the unmanned driving of the vehicle 100 using a positional relation between the vehicle 100 and the inspection facility 500 in the imaging data.

### E. Other Embodiment 2:

(E1) In each of the above embodiments, the sensors 300 are not limited to being cameras, and may be, for example, a ranging device. The ranging device is, for example, a LiDAR device. In such a case, the detection results that are output from the sensor 300 may be three-dimensional point cloud data representing the vehicle 100. In this case, the control device 200 and the vehicle 100 may acquire vehicle position information by performing template matching using the three-dimensional point cloud data as the detection results, and reference point cloud data that is prepared in advance.

(E2) In the above first embodiment, the control device 200 carries out the processing from the acquisition of the vehicle position information to the generating of the traveling control signal. Alternatively, the vehicle 100 may carry out at least part of the processing from the acquisition of the vehicle position information to the generating of the traveling control signal. For example, the following aspects (1) to (3) may be adopted.
(1) The control device 200 may acquire vehicle position information, decide a target position to which the vehicle 100 should proceed next, and generate a route from the current position of the vehicle 100, represented by the vehicle position information that is acquired, to the target position thereof. The control device 200 may generate a route to a target position that is located between the current position and the destination, or may generate a route to the destination. The control device 200 may transmit the route that is generated to the vehicle 100. The vehicle 100 may generate a traveling control signal such that the vehicle 100 travels over the route that is received from the control device 200, and may control the actuator group 120 using the traveling control signal that is generated.
(2) The control device 200 may acquire vehicle position information and transmit the vehicle position information that is acquired to the vehicle 100. The vehicle 100 may decide a target position to which the vehicle 100 should proceed next, generate a route from the current position of the vehicle 100, indicated by the vehicle position information that is received, to the target position, generate a traveling control signal such that the vehicle 100 travels over the route that is generated, and control the actuator group 120 using the traveling control signal that is generated.
(3) In the above aspects (1) and (2), an internal sensor may be installed in the vehicle 100, and detection results that are output from the internal sensor may be used in at least one of the generation of a route and the generation of a traveling control signal. The internal sensor is a sensor that is installed in the vehicle 100. Examples of the internal sensor can include a sensor that detects a motion state of the vehicle 100, a sensor that detects operational states of various components of the vehicle 100, and a sensor that detects the environment in the vicinity of the vehicle 100. Specific examples of the internal sensor can include a camera, a LiDAR device, a millimeter-wave radar device, an ultrasonic sensor, a Global Positioning System (GPS) sensor, an acceleration sensor, a gyro sensor, and so forth. For example, in the above aspect (1), the control device 200 may acquire detection results from the internal sensor, and reflect the detection results from the internal sensor in a route when generating the route. In the above aspect (1), the vehicle 100 may acquire detection results from the internal sensor, and reflect the detection results from the internal sensor in a traveling control signal when generating the traveling control signal. In the above aspect (2), the vehicle 100 may acquire detection results from the internal sensor, and reflect the detection results from the internal sensor in a route when generating the route. In the above aspect (2), the vehicle 100 may acquire detection results from the internal sensor, and reflect the detection results from the internal sensor in a traveling control signal when generating the traveling control signal.

(E3) In the third embodiment described above, an internal sensor may be installed in the vehicle 100v, and the detection results that are output from the internal sensor may be used for at least one of the generation of a route and the generation of a traveling control signal. For example, the vehicle 100v may acquire detection results from the internal sensor, and reflect the detection results from the internal sensor in a route when generating the route. The vehicle 100v may acquire detection results from the internal sensor, and reflect the detection results from the internal sensor in a traveling control signal when generating the traveling control signal.

(E4) In the third embodiment described above, the vehicle 100v acquires the vehicle position information using the detection results of the sensor 300. Alternatively, an internal sensor may be installed in the vehicle 100v, and the vehicle 100v may acquire vehicle position information using detection results from the internal sensor, decide a target position to which the vehicle 100v should proceed next, generate a route from the current position of the vehicle 100v indicated by the vehicle position information that is acquired to the target position, generate a traveling control signal for causing traveling over the route that is generated, and control the actuator group 120 using the traveling control signal that is generated. In this case, the vehicle 100v can travel without using detection results from the sensors 300 whatsoever. Note that the vehicle 100v may acquire a target arrival time and traffic congestion information from outside of the vehicle 100v, and reflect the target arrival time or the traffic congestion information in at least one of a route and a traveling control signal.

(E5) In the first embodiment described above, the control device 200 automatically generates a traveling control signal to be transmitted to the vehicle 100. Alternatively, the control device 200 may generate a traveling control signal to be transmitted to the vehicle 100, in accordance with an operation performed by an external operator that is situated outside of the vehicle 100. For example, the external operator may operate an operating device that includes: a display for displaying imaged images that are output from the sensors 300; a steering wheel, an accelerator pedal, and a brake pedal for remotely operating the vehicle 100, and a communication device for communicating with the control device 200 via wired communication or wireless communication, and the control device 200 may generate a traveling control signal in accordance with operations performed at the operating device.

(E6) In each of the above embodiments, it is sufficient for the vehicle 100 to have any configuration that is capable of moving by unmanned driving, and for example, may be in a form of a platform that is equipped with configurations described below. Specifically, it is sufficient for the vehicle 100 to include at least the vehicle control device 110 and the actuator group 120 in order to exhibit the three functions of "traveling", "turning", and "stopping", by unmanned driving. In a case in which the vehicle 100 acquires external information for unmanned driving, the vehicle 100 may further include the communication device 130. That is to say, with respect to the vehicle 100 that is capable of moving by unmanned driving, at least some interior components, such as a driver's seat, a dashboard, and so forth, do not have to be installed, at least some exterior components such as bumpers, fenders, and so forth, do not have to be installed, and a body shell does not have to be installed. In this case, remaining components, such as the body shell and so forth, may be installed on the vehicle 100 before the vehicle 100 is shipped from the factory FC, or alternatively, the vehicle 100 may be shipped from the factory FC in a state without having the remaining components such as the body shell and so forth installed on the vehicle 100, the remaining components such as the body shell and so forth being installed on the vehicle 100 after the shipping. The components may be installed on the vehicle 100 from any direction, such as from an upper side, a lower side, a front side, a rear side, a right side, or a left side, and the components may all be installed from the same direction or may all be installed from directions that differ from each other. Note that when in the form of a platform, the position can be decided in the same manner as with the vehicle 100 according to the first embodiment.

(E7) The vehicle 100 may be manufactured by combining a plurality of modules. The term module refers to a unit made up of one or more components that are grouped in accordance with the configurations and functions of the vehicle 100. For example, the platform of the vehicle 100 may be manufactured by combining a front module that makes up a front portion of the platform, a central module that makes up a central portion of the platform, and a rear module that makes up a rear portion of the platform. Note that the number of modules making up the platform is not limited to three, and may be two or less, or four or more. Part of the vehicle 100 other than the platform may be modularized, in addition to or instead of the platform. Also, various types of modules may include any exterior components, such as a bumper or a grille, or any interior components, such as a seat or a console. Manufacturing by combining a plurality of the modules is not limited to the vehicle 100, and moving objects in any aspect may also be manufactured by combining multiple modules. For example, such modules may be manufactured by joining a plurality of components by welding, fasteners, or the like, or may be manufactured by integrally molding at least part of the modules as a single component by casting. The molding technique of integrally molding at least part of the modules as a single component is also referred to as giga casting or mega casting. Using giga casting enables each part of a moving object that was conventionally formed by joining a plurality of components to be formed as a single component. For example, the front module, the central module, and the rear module may be manufactured using giga casting.

(E8) Transporting of the vehicle 100 by traveling using unmanned driving of the vehicle 100 is called "self-propelled transport". A configuration for realizing self-propelled transport is also referred to as "Remote Control Auto Driving System". A production method for producing the vehicle 100 using self-propelled transport is also referred to as "self-propelled production". In self-propelled production, for example, at least part of transporting of the vehicle 100 in the factory FC in which the vehicle 100 is manufactured is realized through self-propelled transport.

(E9) In each of the above embodiments, part or all of the functions and processing that are realized by software may be realized by hardware. Also, part or all of the functions and processing that are realized by hardware may be realized by software. Examples of hardware that may be used for realizing the various functions in the above embodiments include various types of circuits, such as integrated circuits and discrete circuits.

The present disclosure is not limited to the above embodiments, and can be realized by a variety of configurations without departing from the spirit and scope thereof. For example, the technical features in each embodiment corresponding to the technical features in each aspect that is described in the "SUMMARY OF THE INVENTION" can be replaced or combined as appropriate in order to solve part or all of the above problems or achieve part or all of the above effects. When the technical features are not described as being essential in the present specification, such features can be omitted as appropriate.

## Claims

1. A system, comprising:
an inspection facility that inspects a vehicle that is travelable by unmanned driving; and
a control device that controls the unmanned driving of the vehicle such that a direction of the vehicle with respect to the inspection facility is oriented in a direction that is set in advance.

2. The system according to claim 1, wherein
the control device
acquires imaging data that is output from an imaging unit that is provided outside of the vehicle, and that performs imaging of the inspection facility and the vehicle and outputs the imaging data, and
controls the unmanned driving of the vehicle using the imaging data, such that the direction of the vehicle with respect to the inspection facility is oriented in the direction that is set in advance.

3. The system according to claim 2, wherein the control device acquires master data from a storage device that stores the master data that is imaging data of the vehicle in a state of being oriented in the direction that is set in advance with respect to the inspection facility, and further uses the master data to control the unmanned driving of the vehicle such that the direction of the vehicle is oriented in the direction that is set in advance with respect to the inspection facility.

4. The system according to claim 2, wherein
the inspection facility includes a marker that serves as a reference for the direction that is set in advance for the vehicle,
the imaging unit performs imaging of the vehicle and the marker, and outputs the imaging data including the vehicle and the marker, and
the control device uses the marker in the imaging data to control the unmanned driving of the vehicle such that the direction of the vehicle is oriented in the direction that is set in advance.

5. The system according to claim 1, wherein
the control device
acquires imaging data from an imaging unit that is provided to the vehicle, and that performs imaging of the inspection facility and outputs the imaging data including the inspection facility, and
controls the unmanned driving of the vehicle using the imaging data, such that the direction of the vehicle with respect to the inspection facility is oriented in the direction that is set in advance.
